# EUROPÄISCHE PATENTSCHRIFT

(11) **EP 3 835 032 B1**
(45) Veröffentlichungstag und Bekanntmachung des Hinweises auf die Patenterteilung: **10.08.2022**
(21) Anmeldenummer: 19215221.3
(22) Anmeldetag: 11.12.2019
(51) Int. Cl.: B29C 64/124, B29C 64/393, B33Y 10/00, B33Y 30/00, B33Y 50/02, G01B 11/25

(54) **PRÜFVORRICHTUNG FÜR EINE STEREOLITHOGRAFIE-VORRICHTUNG, STEREOLITHOGRAFIE-VORRICHTUNG ZUR HERSTELLUNG EINES DREIDIMENSIONALEN OBJEKTS UND PRÜFVERFAHREN SOWIE EIN VERFAHREN ZUR HERSTELLUNG EINES DREIDIMENSIONALEN OBJEKTS**
INSPECTION DEVICE FOR A STEREOLITHOGRAPHY DEVICE, STEREOLITHOGRAPHY DEVICE FOR PRODUCING A THREE-DIMENSIONAL OBJECT, AND TEST METHOD AND A METHOD FOR PRODUCING A THREE-DIMENSIONAL OBJECT
DISPOSITIF DE CONTRÔLE POUR UN DISPOSITIF DE STÉRÉOLITHOGRAPHIE, DISPOSITIF DE STÉRÉOLITHOGRAPHIE PERMETTANT DE FABRIQUER UN OBJET TRIDIMENSIONNEL ET PROCÉDÉ DE CONTRÔLE, AINSI QUE PROCÉDÉ DE FABRICATION D'UN OBJET TRIDIMENSIONNEL

(43) Veröffentlichungstag der Anmeldung: 16.06.2021
(73) Patentinhaber: Deutsche Telekom AG, 53113 Bonn (DE)
(72) Erfinder: DUHME, Kai, 26131 Oldenburg (DE)
(74) Vertreter: Vossius & Partner Patentanwälte Rechtsanwälte mbB

(56) Entgegenhaltungen:
- CN-A- 105 269 821
- US-A- 5 460 758
- US-A1- 2015 306 825

## Beschreibung

### Gebiet der Erfindung

Die vorliegende Erfindung betrifft eine Prüfvorrichtung für eine Stereolithografie-Vorrichtung zur Herstellung eines dreidimensionalen Objekts, eine Stereolithografie-Vorrichtung zur Herstellung eines dreidimensionalen Objekts, die die erfindungsgemäße Prüfvorrichtung aufweist sowie ein entsprechendes Prüfverfahren und ein Verfahren zur Herstellung eines dreidimensionalen Objekts, das das Prüfverfahren aufweist.

### Stand der Technik

Beim dreidimensionalen Drucken, 3D-Drucken, von Objekten mittels Stereolithografie werden üblicherweise einzelne Schichten eines UV-sensitiven Resins, welches sich in einem Resin-Behälter einer Druckvorrichtung befindet, durch Einstrahlung von UV-Licht ausgehärtet. Im Zuge dessen wird eine Aufbauplatte der Druckvorrichtung mit dem auszuhärtenden Resin in Kontakt gebracht, bevor das Resin selektiv mit dem UV-Licht bestrahlt wird. Daraufhin härtet das Resin an den entsprechenden Stellen aus und verbindet sich mit der Aufbauplatte, das heißt es haftet daran an.

Die Aufbauplatte mit der ausgehärteten, anhaftenden Resin-Schicht wird nun in eine Richtung verschoben in der das 3D-Druck-Objekt schichtweise aufgebaut werden soll und es wird neues, nicht-ausgehärtetes Resin mit dem ausgehärteten Resin in Kontakt gebracht. Das neue Resin wird nun ebenfalls selektiv mit UV-Licht bestrahlt, härtet somit aus und verbindet sich mit den bereits ausgehärteten Schichten des Resin, die an der Aufbauplatte anhaften. Dieser Prozess wird solange wiederholt bis das herzustellende 3D-Druck-Objekt vollständig schichtweise aufgebaut wurde.

Bei der Aushärtung des Resins kann es jedoch auch zu einer Anhaftung der ausgehärteten Schichten an einer Schutzfolie am Boden des Resin-Behälters kommen. Dies kann zur Folge haben, dass sich bereits ausgehärtete Schichten ganz oder teilweise von der Aufbauplatte oder den bereits zuvor ausgehärteten Schichten lösen, was zu Fehlern im Druckergebnis führt. Weiterhin können Beschädigungen an der Druck-Vorrichtung auftreten. Daher ist es essenziell eine Ablösung des bereits ausgehärteten Materials rechtzeitig zu erkennen. Bisweilen wird dies durch manuelle Kontrolle des Druckvorgangs realisiert. Beim Auftreten von Fehlern, beispielsweise einem teilweise oder vollständigen Ablösen des gedruckten Objekts von der Aufbauplatte, wird der Druckvorgang manuell abgebrochen.

Aus der US 2004/0162629 A1 ist ein 3D-Druck-System zur Erzeugung von 3D-Druck-Objekten, bekannt. Das 3D-Druck-System weist eine Kamera auf, mit der Bilder von den Betriebsbedingungen aufgenommen werden. Mit dem 3D-Druck-System ist über ein Netzwerk ein Benutzerendgerät verbunden. Die Kamerabilder werden über das Netzwerk an das Benutzerendgerät übertragen und werden angezeigt. Ein Benutzer kann die Erzeugung des 3D-Objektes beobachten und die Kamera aus der Ferne steuern.

Die US 2015/306825 A1 bezieht sich auf einen 3D-Druckapparat, umfassend: einen Tank, eine bewegliche Plattform, eine Lichtquelle, ein Detektionsmodul und eine Steuerungseinheit. Der Tank ist mit einem flüssigen Formmaterial gefüllt und die bewegliche Plattform ist beweglich über dem Tank angeordnet. Die Lichtquelle ist unterhalb des Tanks angeordnet und konfiguriert, um Licht auf das flüssige Formmaterial zu projizieren, wodurch dieses aushärtet und somit Schicht für Schicht ein dreidimensionales Objekt an der beweglichen Plattform aufbaut. Das Detektionsmodul ist über dem Tank angeordnet und umfasst einen Signalsender und einen Signalempfänger. Die Steuerungseinheit bestimmt auf Basis des empfangenen Signals, ob das bisher aufgebaute dreidimensionale Objekt fehlerhaft ist.

Die US 5 460 758 A bezieht sich auf eine Vorrichtung und ein Verfahren zur schichtweisen Fertigung eines dreidimensionalen Objekts, beispielsweise mittels Stereolithografie.

Die CN 105 269 821 A bezieht sich auf einen 3D-DLP-Drucker und ein Druckverfahren dafür. Der Drucker umfasst unter anderem einen Tank, zum Lagern des Formmaterials und Formmaterial-Füllvorrichtung. Der Füllstand des Formmaterials im Tank wird mittels einer Laserausgabekomponente und einer Laserempfangskomponente, die mit einer Steuereinheit verbunden sind, überwacht. Bei zu niedrigem Füllstand wird die Formmaterial-Füllvorrichtung angesteuert und es wird automatisiert Formmaterial in den Tank nachgefüllt.

Die vorliegende Erfindung hat die Aufgabe eine Prüfvorrichtung, eine Stereolithografie-Vorrichtung sowie jeweilige Verfahren bereitzustellen, mit der bzw. dem ein Druckvorgang beim Stereolithografie 3D-Druck automatisch überwacht und ohne manuellen Eingriff Fehler erkannt werden.

### Kurzbeschreibung der Erfindung

Die genannten Aufgaben werden durch die Prüfvorrichtung, die Stereolithografie-Vorrichtung sowie die Verfahren gemäß den unabhängigen Patentansprüchen gelöst. Weitere Aspekte der Erfindung sind in den abhängigen Ansprüchen angegeben.

Gemäß einem ersten Aspekt betrifft die vorliegende Erfindung eine Prüfvorrichtung für eine Stereolithografie-Vorrichtung gemäß des unabhängigen Anspruchs 1.

Die Empfängereinheit ist dabei vorzugsweise konfiguriert, um Licht zu erfassen, das das 3D-Druck-Objekt bzw. die Aufbauplatte durchdringt.

Anders formuliert wird das Licht erfasst, das nicht von dem 3D-Druck-Objekt bzw. der Aufbauplatte abgeschattet wird sondern durchgelassen wird. Die Verarbeitungseinrichtung analysiert das von der Empfängereinheit empfangene Licht, wobei vorzugsweise pixelweise geprüft wird, ob Licht erfasst wird oder nicht. Vorzugsweise wird das Vorhandensein einzelner Pixel bzw. deren empfangene Helligkeit über eine "ja-nein-Prüfung" ermittelt.

Bei Verwendung eines Materials, beispielsweise ein annähernd klares UV-sensitives Resin, das für das von der Sendereinheit abgegebene Licht teilweise durchlässig ist, ist die Empfängereinheit vorzugsweise konfiguriert, um Licht zu erfassen, das das 3D-Druck-Objekt bzw. die Aufbauplatte durchdringt und das von dem 3D-Druck-Objekt teilweise durchgelassen wird. Anders formuliert wird das Licht erfasst, das nicht von dem 3D-Druck-Objekt bzw. der Aufbauplatte abgeschattet wird.

Die Verarbeitungseinrichtung analysiert das von der Empfängereinheit empfangene Licht, wobei vorzugsweise pixelweise geprüft wird, ob Licht erfasst wird oder nicht. Vorzugsweise wird außerdem geprüft, welche Helligkeit das empfangene Licht hat. Vorzugsweise wird das Vorhandensein einzelner Pixel bzw. deren empfangene Helligkeit durch einen Vergleich mit einem vorgegebenen Schwellwert über eine "ja-nein-Prüfung" ermittelt.

Vorzugsweise besteht die Sendereinheit aus einem Array von Laserdioden. Das Array der Laserdioden erstreckt sich vorzugsweise in zwei Raumrichtungen. Alternativ ist die Sendereinheit als eindimensionales Array von Laserdioden ausgebildet.

Weiterhin wird das Licht der Sendereinheit als zweidimensionales Lichtgitter emittiert. Wenn die Sendereinheit als eindimensionales Array von Laserdioden ausgebildet ist, wird das eindimensionale Array mittels einer Bewegungseinrichtung entlang einer zweiten Raumrichtung verfahren und damit ein zweidimensionales Lichtgitter emuliert.

Das emittierte Licht weist vorzugsweise eine Wellenlänge auf, die außerhalb des lichtsensitiven Bereichs des lichtsensitiven, aushärtbaren Materials liegt. Das Lichtgitter wird vorzugsweise auf das gesamte bereits ausgehärtete Material des herzustellenden 3D-Druck-Objekts an der Aufbauplatte emittiert.

Die Empfängereinheit besteht vorzugsweise aus einem Array aus Empfangsdioden. Das Array der Empfangsdioden erstreckt sich dabei vorzugsweise in zwei Raumrichtungen.

Die Verarbeitungseinheit ist konfiguriert, um das von der Sendereinheit emittierte zweidimensionale Lichtgitter und das durch die Empfängereinheit empfangene Lichtgitter mit einem Soll- Lichtgitter zu vergleichen. Dieses Soll-Lichtgitter entspricht dem Lichtgitter, das das 3D-Druck-Objekt bzw. die Aufbauplatte, bei korrektem Aufbau des 3D-Druck-Objekts und korrektem Anhaften der bereits ausgehärteten Schichten des 3D-Druck-Objekts an der Aufbauplatte durchdringt. Das Soll-Lichtgitter basiert vorzugsweise auf einem Schichtenmodell bzw. Belichtungsdaten, die das 3D-Druck-Objekt repräsentieren.

Vorzugsweise entsprechen die Belichtungsdaten den Daten, die die Grundlage des Stereolithografie-Druckprozesses bilden. Alternativ werden die Belichtungsdaten der Verarbeitungseinheit von einer externen Quelle zugeführt.

Die Genauigkeit der Überwachung lässt sich über die Anzahl und den Abstand der Laserdioden der Sendereinheit zueinander sowie der Empfangsdioden der Empfängereinheit zueinander regulieren. Eine höhere Anzahl bzw. eine geringerer Abstand zwischen den Dioden ermöglicht eine höhere Abtastrate und führt somit zu einer höheren Genauigkeit der Überwachung.

Die Prüfvorrichtung weist vorzugsweise eine Ausgabeeinheit auf, wobei die Ausgabeeinheit mit der Verarbeitungseinheit verbunden ist und konfiguriert ist, um, basierend auf einem Ausgangssignal der Verarbeitungseinheit, ein Warnsignal auszugeben. Das Ausgangssignal der Verarbeitungseinheit wird kabellos oder kabelgebunden an die Ausgabeeinheit übertragen. Gemäß einem weiteren Aspekt betrifft die vorliegende Erfindung eine Stereolithografie-Vorrichtung zur Herstellung eines dreidimensional gedruckten Objektes, 3D-Druck-Objekts, mit der zuvor beschriebenen Prüfvorrichtung.

Die Stereolithografie-Vorrichtung weist einen Behälter zur Speicherung und Zuführung eines lichtsensitiven, aushärtbaren Materials, insbesondere eines ultraviolett-, UV-, sensitiven, aushärtbaren Materials, und besonders bevorzugt eines UV-sensitiven, aushärtbaren Resins auf. Weiterhin weiß die Stereolithografie-Vorrichtung eine Lichteinheit auf, die konfiguriert ist, um Licht mit einer Wellenlänge innerhalb des lichtsensitiven Bereichs des aushärtbaren Materials auf das Material einzustrahlen und dadurch das Material selektiv auszuhärten. Die Stereolithografie-Vorrichtung weist zudem eine Aufbauplatte auf, die konfiguriert ist, um ein Anhaften des ausgehärteten Materials zu ermöglichen, und eine bewegliche Halteeinrichtung, die konfiguriert ist, um die Aufbauplatte und/oder den Behälter zu halten und um die Aufbauplatte und den Behälter relativ zueinander entlang mindestens einer Raumrichtung zu verfahren, die einer Aufbaurichtung des herzustellenden Objektes entspricht.

Gemäß einem weiteren Aspekt betrifft die vorliegende Erfindung ein Verfahren zur automatischen Prüfung des Anhaftens eines dreidimensional gedruckten Objekts, 3D-Druck-Objekts, aus einem lichtsensitiven, aushärtbaren Material, an einer Aufbauplatte einer Stereolithografie-Vorrichtung gemäß des unabhängigen Anspruchs 7.

Vorzugsweise wird die Aufbauplatte, vor der Lichtemission in eine Prüfposition verfahren. Genauer gesagt wird die Aufbauplatte mit den anhaftenden bereits ausgehärteten Materialschichten durch Translationen, Rotationen und/oder Verkippungen in eine Prüfposition bewegt, die es ermöglicht das Anhaften von bereits ausgehärteten Schichten aneinander und/oder das Anhaftens von bereits ausgehärteten Schichten an der Aufbauplatte zu prüfen.

Das Licht wird als zweidimensionales Gitter auf die bereits ausgehärteten Schichten des 3D-Druck-Objekts an der Aufbauplatte emittiert. Vorzugsweise weist das emittierte Licht eine Wellenlänge auf, die außerhalb des lichtsensitiven Bereichs des lichtsensitiven, aushärtbaren Materials liegt. Weiterhin vorzugsweise wird das Licht schräg zu einer Aufbaurichtung des herzustellenden 3D-Druck-Objekts emittiert.

Bei der Analyse wird das empfangene Lichtgitter mit einem Soll-Lichtgitter basierend auf Daten, die das 3D-Druck-Objekt repräsentieren, verglichen. Vorzugsweise wird dabei der durch das 3D-Druck-Objekt bzw. die Aufbauplatte hindurchgetretene Lichtanteil des emittierten Lichtgitters mit dem Soll-Lichtgitter verglichen. Vorzugsweise wird die Analyse durch eine Software durchgeführt in der eine Pixel-Map hinterlegt ist. Die Pixel der Pixel-Map werden vorzugsweise mit dem empfangenen Lichtgitter verglichen, und eine Ablösung des 3D-Druck-Objekts von der Aufbauplatte oder Druckfehler im 3D-Druck-Objekt werden durch einen einfachen Vergleich von Pixeln ermittelt. Vorzugsweise wird das Vorhandensein einzelner Pixel bzw. deren empfangene Helligkeit über eine "ja-nein-Prüfung" ermittelt.

Mit dem zuvor beschriebenen Prüfverfahren lassen sich Anhaftungsprobleme automatisiert, frühzeitig und schnell erkennen. Somit werden Druckfehler vermieden und die Stereolithografie-Vorrichtung wird vor mechanischer Beschädigung geschützt. Aufgrund der hohen Geschwindigkeit der Fehlererkennung kann der Druckprozess nach dem Auftreten eines Fehlers und dessen Behebung schnell wieder fortgesetzt werden.

Vorzugsweise wird ein Warnsignal basierend auf dem Ergebnis der Analyse ausgegeben. Alternativ kann das Warnsignal kabelgebunden oder kabellos an ein mobiles Endgerät übertragen werden. Hierzu können beispielsweise LAN, WLAN oder Bluetooth genutzt werden.

Gemäß einem weiteren Aspekt betrifft die vorliegende Erfindung ein Verfahren zur Herstellung eines dreidimensional gedruckten Objekts, 3D-Druck-Objekts, aus einem lichtsensitiven, aushärtbaren Material, vorzugsweise aus einem ultraviolett-, UV-, sensitiven Material, und besonders bevorzugt aus UV-sensitivem Resin, mittels einer Stereolithografie-Vorrichtung, wobei das Verfahren das zuvor beschriebene Prüfverfahren aufweist. Der Stereolithografie-Vorrichtung wird zunächst ein Schichtenmodell zugeführt, das das herzustellende 3D-Druck-Objekt repräsentiert. Hieraus werden Belichtungsdaten für die Herstellung der einzelnen Schichten des herzustellenden 3D-Druck-Objekts sowie Daten zur Prüfung eines Anhaftungsproblems zwischen bereits ausgehärteten Schichten des 3D-Druck-Objekts untereinander bzw. zwischen bereits ausgehärteten Schichten und der Aufbauplatte der Stereolithografie-Vorrichtung, ermittelt. Danach wird die Aufbauplatte der Stereolithografie-Vorrichtung positioniert und anschließend wird der Aufbauplatte lichtsensitives, aushärtbares Material zugeführt. Basierend auf den Belichtungsdaten wird Licht mit einer Wellenlänge innerhalb des lichtsensitiven Bereichs des lichtsensitiven, aushärtbaren Materials auf das lichtsensitive, aushärtbare Material eingestrahlt, sodass eine erste Materialschicht selektiv ausgehärtet wird und an der Aufbauplatte anhaftet. Daraufhin wird die Aufbauplatte in Aufbaurichtung des herzustellenden 3D-Druck-Objekts verschoben und es wird neues, nicht ausgehärtetes, lichtsensitives Material zu der zuvor ausgehärteten Schicht zugeführt. Dieses neue Material wird ebenfalls basierend auf den Belichtungsdaten selektiv belichtet, sodass eine nächste Materialschicht ausgehärtet wird und an der zuletzt ausgehärteten Materialschicht anwächst. Dieser Prozessschritt wird solange wiederholt bis das herzustellende 3D-Druck-Objekt vollständig aufgebaut wurde. Während des Aufbauprozesses wird das zuvor beschriebene Prüfverfahren selektiv durchgeführt, vorzugsweise nachdem eine neue Materialschicht ausgehärtet wurde.

Vorzugsweise weist das erfindungsgemäße Herstellungsverfahren eine automatische Anpassung von Parametern der Stereolithografie-Vorrichtung auf, basierend auf dem Ergebnis des Prüfverfahrens. Die automatische Anpassung umfasst dabei mindestens eine der folgenden Maßnahmen: Ausschalten der Lichteinheit, Verfahren der Aufbauplatte in eine sichere Position, Stoppen der Zufuhr des lichtsensitiven, aushärtbaren Materials, und Entfernen von noch nicht ausgehärtetem lichtsensitiven, aushärtbaren Material von der Aufbauplatte beziehungsweise von bereits ausgehärteten Schichten. Das entfernte noch nicht ausgehärtete Material wird vorzugsweise in den Behälter zur Speicherung zurückgeführt.

Die zur Herstellung verwendete Stereolithografie-Vorrichtung ist vorzugsweise eine Stereolithografie-Vorrichtung mit einer Prüfvorrichtung, wie sie zuvor beschrieben wurde.

Die Erfindung ermöglicht eine automatische Überprüfung des Druckvorgangs und insbesondere eine automatische Erkennung eines Anhaftungsproblems zwischen bereits ausgehärteten Schichten des herzustellenden Objekts und einer Aufbauplatte (engl.: Buildplate) der Stereolithografie-Vorrichtung, oder zwischen bereits ausgehärteten Schichten des herzustellenden Objekts. Nach dem automatischen Erkennen eines Fehlers können automatisch adäquate Maßnahmen eingeleitet werden, um ein unbrauchbares Druckergebnis zu verhindern und Beschädigungen an der Stereolithografie-Vorrichtung zu vermeiden. Des Weiteren wird die Wiederaufnahme des Druckversuchs durch eine frühzeitige automatische Erkennung beschleunigt.

Durch die Verwendung von Licht mit einer Wellenlänge, die außerhalb des lichtsensitiven Bereichs des lichtsensitiven, aushärtbaren Materials liegt, wird eine ungewollte Aushärtung des lichtsensitiven, aushärtbaren Materials durch direkte und/oder indirekte Bestrahlung verhindert.

### Kurzbeschreibung der Figuren

Die Erfindung wird anhand der beigefügten Figuren näher erläutert. Es zeigen:
- Fig. 1:: Eine schematische Ansicht von Komponenten einer Ausführungsform einer erfindungsgemäßen Prüfvorrichtung;
- Fig. 2:: Eine schematische Seitenansicht einer Ausführungsform einer erfindungsgemäßen Prüfvorrichtung;
- Fig. 3:: Eine schematische Ansicht von Komponenten einer Ausführungsform einer erfindungsgemäßen Stereolithografie-Vorrichtung;
- Fig. 4:: Eine schematische Seitenansicht einer Ausführungsform einer erfindungsgemäßen Stereolithografie-Vorrichtung;
- Fig. 5:: Ein Ablaufdiagram einer Ausführungsform eines erfindungsgemäßen Prüfverfahrens; und
- Fig. 6:: Ein Ablaufdiagramm einer Ausführungsform eines erfindungsgemäßen Herstellungsverfahrens.

### Detaillierte Beschreibung der Erfindung

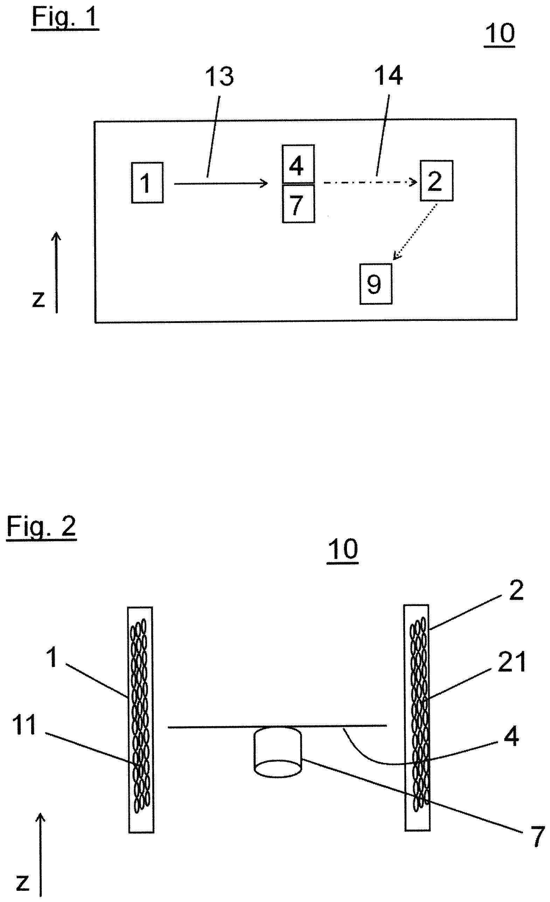

Fig. 1 zeigt schematisch den Aufbau der Prüfvorrichtung 10 für eine Stereolithografie-Vorrichtung zur Herstellung eines dreidimensionalen Objekts, 3D-Druck-Objekts, 7 gemäß einer Ausführungsform der vorliegenden Erfindung. Die Prüfvorrichtung 10 weist eine Sendereinheit 1, eine Empfängereinheit 2 und eine Verarbeitungseinheit 9 auf. Die Sendereinheit 1 ist konfiguriert, um Licht 13 auf einen Bereich des herzustellenden 3D-Druck-Objekts 7, bzw. Schichten davon, die bereits ausgehärtet wurden an einer Aufbauplatte 4 einer Stereolithografie-Vorrichtung zu emittieren. Das emittierte Licht 13 durchdringt das 3D-Druck-Objekt 7 und/oder die Aufbauplatte 4 zumindest teilweise oder es wird vollständig absorbiert/reflektiert. Die Empfängereinheit 2 befindet sich in Strahlrichtung hinter dem 3D-Druck-Objekt 7 und der Aufbauplatte 4 und ist konfiguriert, um einen Lichtanteil 14 des emittierten Lichts 13 zu erfassen, der das 3D-Druck-Objekt 7 bzw. die Aufbauplatte 4 durchdringt.

Die Verarbeitungseinheit 9 ist mit der Empfängereinheit 2 kabellos oder kabelgebunden verbunden und ist konfiguriert, um das von der Empfängereinheit 2 empfangene Licht zu analysieren.

Wie in Fig. 2 dargestellt ist, besteht die Sendereinheit 1 der Prüfvorrichtung 10 vorzugsweise aus einem Array von Laserdioden 11. Die Empfängereinheit 2 besteht vorzugsweise aus einem Array von Empfangsdioden 21. Beide Arrays erstrecken sich vorzugsweise in zwei Raumrichtungen.

Das Licht 13 wird von der Sendereinheit 1 als zweidimensionales Lichtgitter auf das 3D-Druck-Objekt 7 und die Aufbauplatte 4 emittiert.

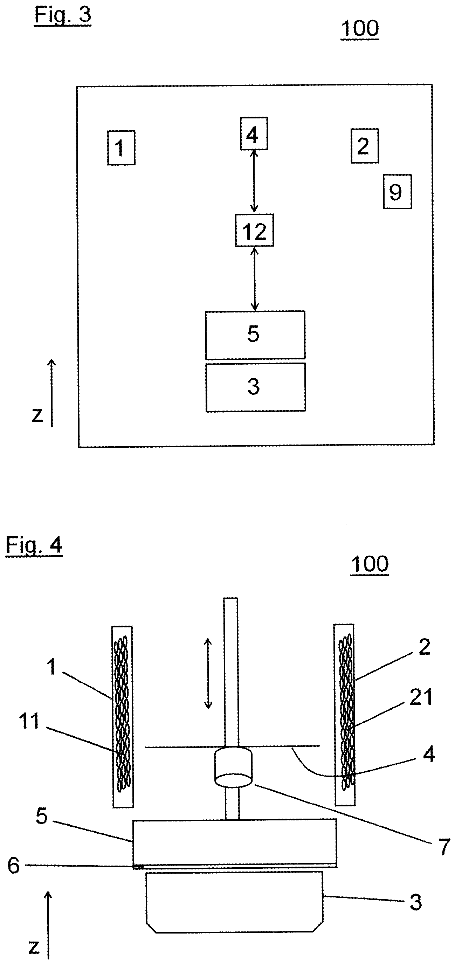

In Fig. 3 ist der Aufbau der erfindungsgemäßen Stereolithografie-Vorrichtung 100 schematisch dargestellt. Die Stereolithografie-Vorrichtung 100 weist die zuvor beschriebene Prüfvorrichtung 10, einen Behälter 5 zur Speicherung und Zuführung von lichtsensitivem, aushärtbaren Material, eine Lichteinheit 3 zum selektiven Aushärten des Materials durch Emission von Licht sowie eine bewegliche Halteeinrichtung 12 auf. Die Halteeinrichtung 12 ist konfiguriert, um die Aufbauplatte und/oder den Behälter zu halten und um die Aufbauplatte und den Behälter relativ zueinander entlang mindestens einer Raumrichtung zu bewegen, wie durch die Pfeile in Fig. 3 angedeutet ist. In dem dargestellten Beispiel erfolgt die Bewegung nach oben bzw. unten bezogen auf die Richtung der Schwerkraft, das heißt in Z-Richtung.

Wie in Fig. 4 dargestellt ist, hat der Behälter 5 der erfindungsgemäßen Stereolithografie-Vorrichtung 100 einen transparenten Boden, durch den das von der Lichteinheit 3 emittierte Licht auf das auszuhärtende Material gelangt. Vorzugsweise befindet sich an dem Boden des Behälters 5 eine transparente Folie 6. Diese transparente Folie 6 besteht vorzugsweise aus einem Copolymer aus Tetrafluorethylen-Hexafluorpropylen (FEP) oder einem ähnlichen Material, das sich für die Verwendung in einem Stereolithografie-3D-Druck-Prozess eignet.

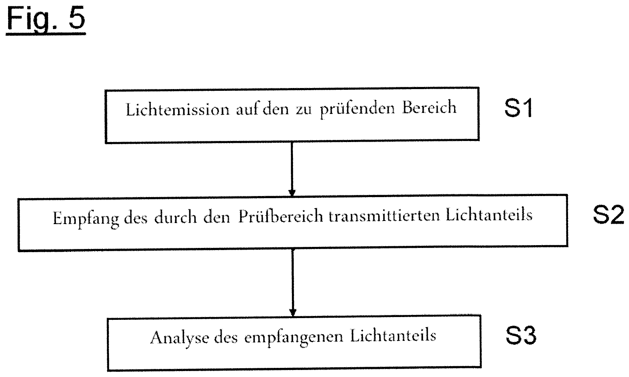

In Fig. 5 ist das erfindungsgemäße Verfahren zur automatischen Prüfung des Anhaftens eines 3D-Druck-Objekts 7 an einer Aufbauplatte 4 einer Stereolithografie-Vorrichtung 100 gezeigt. Hierbei wird Licht 13 über die Sendereinheit 1 auf einen Bereich emittiert in dem sich bereits ausgehärtete Schichten des 3D-Druck-Objekts 7 befinden und an der Aufbauplatte 4 haften, S1. Der durch diesen Bereich tretende Anteil 14 des Lichts 13 wird durch die Empfängereinheit 2 erfasst, S2. Danach wird dieser Lichtanteil 14 in Schritt S3 analysiert.

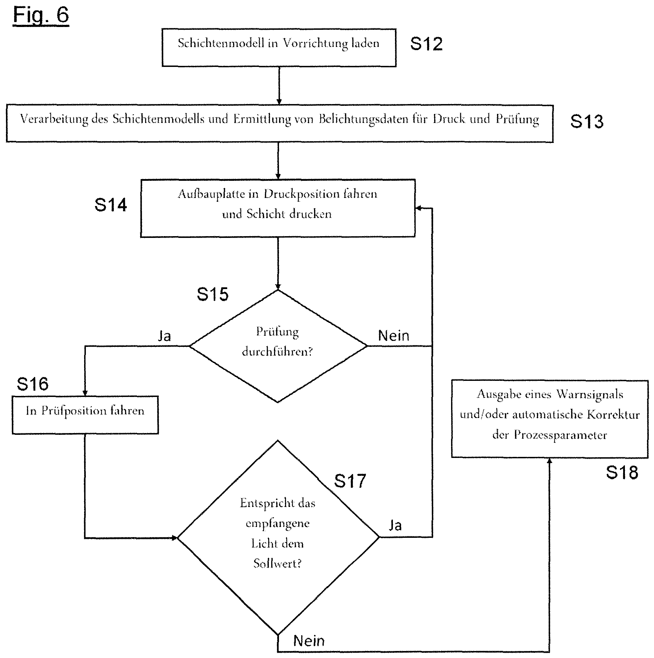

Fig. 6 stellt das erfindungsgemäße Verfahren zur Herstellung eines 3D-Druck-Objekts 7 mittels einer Stereolithografie-Vorrichtung 100 dar. Das Verfahren beginnt, indem ein Schichtenmodell des 3D-Druck-Objekts 7 in die Stereolithografie-Vorrichtung 100 geladen wird, S12. Das Schichtenmodell wird daraufhin verarbeitet und Belichtungsdaten für den Druckvorgang werden ermittelt und geprüft, S13. Danach wird die Aufbauplatte 4 der Stereolithografie-Vorrichtung 100 in eine Druckposition gefahren in der eine erste Schicht des herzustellenden 3D-Druck-Objekts 7 entsprechend der Belichtungsdaten selektiv ausgehärtet wird, S14. Nachdem die Aushärtung der Schicht abgeschlossen ist, wird in Schritt S15 entschieden, ob eine Prüfung auf Fehler in den bereits ausgehärteten Schichten und/oder bei der Anhaftung, gemäß der zuvor beschriebenen Schritte S1 bis S3, durchgeführt werden soll. Dies ist in Fig. 6 vereinfacht durch Schritt S17 abgebildet. Wie in Schritt S16 angedeutet ist, wird die Aufbauplatte 4 hierzu vorzugsweise in eine Prüfposition gefahren. Falls in Schritt S15 entschieden wird, dass keine Prüfung der Anhaftung durchgeführt werden soll, wird Schritt S14 erneut ausgeführt.

Abhängig von dem Ergebnis der Prüfung in Schritt S17, kehrt das Verfahren entweder zu Schritt S14 zurück, falls der Anteil 14 des emittierten Lichts 13, der das 3D-Druck-Objekt 7 bzw. die Aufbauplatte 4 durchdringt einem zuvor ermittelten Sollwert entspricht. Andernfalls wird vorzugsweise in Schritt S18 ein Warnsignal ausgegeben und/oder eine automatische Korrektur der Prozessparameter der Stereolithografie-Vorrichtung 100 vorgenommen. Der Sollwert ergibt sich vorzugsweise aus dem Schichtenmodell welches in Schritt S11 in die Stereolithografie-Vorrichtung 100 geladen wurde. Alternativ kann der Sollwert von einer externen Quelle zugeführt werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Prüfvorrichtung (10) für eine Stereolithografie-Vorrichtung, die aufweist:
eine Sendereinheit (1), die auf einer ersten Seite des herzustellenden 3D-Druck-Objekts (7) angeordnet ist und konfiguriert ist, um Licht (13) auf mindestens einen Bereich des 3D-Druck-Objekts (7) an der Aufbauplatte (4) der Stereolithografie-Vorrichtung zu emittieren,
eine Empfängereinheit (2), die auf einer zweiten Seite des 3D-Druck-Objekts (7) in Strahlrichtung hinter dem 3D-Druck-Objekt (7) und der Aufbauplatte (4) angeordnet ist und konfiguriert ist, um einen Anteil (14) des von der Sendereinheit (1) emittierten Lichts (13) zu erfassen, und
eine Verarbeitungseinheit (9), die mit der Empfängereinheit (2) verbunden ist **dadurch gekennzeichnet, dass** die Verarbeitungseinheit (9) konfiguriert ist, um das empfangene Licht (14) zu analysieren,
wobei das Licht (13) von der Sendereinheit (1) als zweidimensionales Lichtgitter emittiert wird, und
wobei die Verarbeitungseinheit (9) konfiguriert ist, um den durch die Empfängereinheit empfangenen Lichtanteil des emittierten Lichtgitters mit einem Soll-Lichtgitter zu vergleichen, das auf Daten basiert, die das 3D-Druck-Objekt (7) repräsentieren.

2. Prüfvorrichtung (10) gemäß Anspruch 1, wobei die Sendereinheit (1) aus einem Array von Laserdioden (11) besteht, und/oder wobei die Empfängereinheit (2) aus einem Array aus Empfangsdioden (21) besteht.

3. Prüfvorrichtung (10) gemäß Anspruch 1 oder 2, wobei das von der Sendereinheit (1) emittierte Licht (13) eine Wellenlänge aufweist, die außerhalb des lichtsensitiven Bereichs des lichtsensitiven, aushärtbaren Materials liegt.

4. Prüfvorrichtung (10) gemäß einem der voranstehenden Ansprüche, die ferner eine Ausgabeeinheit aufweist, wobei die Ausgabeeinheit mit der Verarbeitungseinheit (9) verbunden ist und konfiguriert ist, um, basierend auf einem Ausgangssignal der Verarbeitungseinheit (9), ein Warnsignal auszugeben und wobei das Ausgangssignal der Verarbeitungseinheit (9) kabellos oder kabelgebunden an die Ausgabeeinheit übertragen wird.

5. Stereolithografie-Vorrichtung (100) zur Herstellung eines dreidimensional gedruckten Objektes, 3D-Druck-Objekts (7), mit einer Prüfvorrichtung (10) gemäß einem der voranstehenden Ansprüche.

6. Stereolithografie-Vorrichtung (100) gemäß Anspruch 5, die aufweist:
einen Behälter (5) zur Speicherung und Zuführung eines lichtsensitiven, aushärtbaren Materials, insbesondere eines ultraviolett-, UV-, sensitiven, aushärtbaren Materials, bevorzugt eines UV-sensitiven aushärtbaren Resins,
eine Lichteinheit (3), die konfiguriert ist, um Licht mit einer Wellenlänge innerhalb des lichtsensitiven Bereichs des aushärtbaren Materials auf das Material einzustrahlen und dadurch das Material selektiv auszuhärten,
eine Aufbauplatte (4), die konfiguriert ist, um ein Anhaften des ausgehärteten Materials zu ermöglichen, und
eine bewegliche Halteeinrichtung (12), die konfiguriert ist, um die Aufbauplatte (4) und/oder den Behälter (5) zu halten und um die Aufbauplatte (4) und den Behälter (5) relativ zueinander entlang mindestens einer Raumrichtung zu verfahren, die einer Aufbaurichtung des herzustellenden Objektes (7) entspricht.

7. Verfahren zur automatischen Prüfung des Anhaftens eines dreidimensional gedruckten Objekts, 3D-Druck-Objekts (7), aus einem lichtsensitiven, aushärtbaren Material, an einer Aufbauplatte (4) einer Stereolithografie-Vorrichtung, wobei das Verfahren die folgenden Schritte aufweist:
a) Emittieren (S1) von Licht (13) durch eine Sendereinheit (2), die auf einer ersten Seite des herzustellenden 3D-Druck-Objekts (7) angeordnet ist, auf mindestens einen Bereich in dem das 3D-Druck-Objekt (7) die Aufbauplatte (4) berührt, wobei das Licht in Gitterform, als zweidimensionales Gitter, emittiert wird,
b) Empfangen (S2) mindestens eines Anteils (14) des emittierten Lichtes (13) durch eine Empfängereinheit (2), die auf einer zweiten Seite des 3D-Druck-Objekts (7) in Strahlrichtung hinter dem 3D-Druck-Objekt (7) und der Aufbauplatte (4) angeordnet ist, und
c) Analysieren (S3) des empfangenen Lichts (14), wobei der empfangene Anteil des emittierten Lichtes (13) im Zuge der Analyse mit einem Soll-Lichtgitter verglichen wird, basierend auf Daten, die das 3D-Druck-Objekt (7) repräsentieren.

8. Verfahren gemäß Anspruch 7, wobei vorzugsweise die Aufbauplatte (4) vor der Lichtemission (S1) in eine Prüfposition gefahren wird.

9. Verfahren gemäß Anspruch 7 oder 8, wobei das emittierte Licht (13) eine Wellenlänge aufweist, die außerhalb des lichtsensitiven Bereichs des lichtsensitiven, aushärtbaren Materials liegt, und/oder wobei das Licht (13) schräg zu einer Aufbaurichtung des 3D-Druck-Objekts (7) emittiert wird.

10. Verfahren gemäß einem der Ansprüche 7 bis 9, das ferner den Schritt aufweist:
e) Ausgabe eines Warnsignals basierend auf einem Ergebnis der Analyse.

11. Verfahren zur Herstellung eines dreidimensional gedruckten Objekts, 3D-Druck-Objekts, aus einem lichtsensitiven, aushärtbaren Material, insbesondere ultraviolett-, UV-, sensitivem Material, bevorzugt UV-sensitivem Resin, mittels einer Stereolithografie-Vorrichtung, wobei das Verfahren das Prüfverfahren gemäß einem der Ansprüche 7 bis 10 umfasst und ferner folgende Schritte aufweist:
f) Zuführung eines Schichtenmodells (S12), das das herzustellende 3D-Druck-Objekt repräsentiert in eine Stereolithografie-Vorrichtung,
g) Ermittlung und Prüfung von Belichtungsdaten (S13) basierend auf dem zugeführten Schichtenmodell,
h) Positionieren einer Aufbauplatte der Stereolithografie-Vorrichtung,
i) Zuführen des lichtsensitiven, aushärtbaren Materials zur Aufbauplatte,
j) Selektives Belichten des lichtsensitiven aushärtbaren Materials mittels einer Lichteinheit, die, basierend auf den Belichtungsdaten, Licht mit einer Wellenlänge innerhalb des lichtsensitiven Bereichs auf das lichtsensitive, aushärtbare Material einstrahlt, sodass eine erste Materialschicht ausgehärtet wird und an der Aufbauplatte anhaftet,
k) Verschieben der Aufbauplatte in eine Aufbaurichtung des herzustellenden 3D-Druck-Obj ekts,
l) Zuführen von neuem, nicht ausgehärtetem, lichtsensitivem Material zu der in Schritt j) ausgehärteten Schicht, und
m) Selektives Belichten des neu zugeführten lichtsensitiven, aushärtbaren Materials, basierend auf den Belichtungsdaten, sodass eine nächste Materialschicht ausgehärtet wird und an der zuletzt ausgehärteten Materialschicht anwächst,
wobei die Schritte i) bis m) wiederholt werden bis das herzustellende 3D-Druck-Objekt vollständig aufgebaut wurde, und
wobei das Verfahren ferner den Schritt (S15) aufweist:
n) selektives Ausführen des Prüfverfahrens während der Wiederholung der Schritte i) bis m), insbesondere vor Schritt i), wobei die Aufbauplatte (4) vorzugsweise in eine Prüfposition gefahren wird (S16).

12. Verfahren gemäß Anspruch 11, das ferner den Schritt aufweist:
p) Automatische Anpassung von Parametern der Stereolithografie-Vorrichtung (S18) basierend auf einem Ergebnis des Prüfverfahrens (S17), wobei die automatische Anpassung von Parametern der Stereolithografie-Vorrichtung mindestens eine der folgenden Maßnahmen umfasst:
Ausschalten der Lichteinheit,
Verfahren der Aufbauplatte in eine sichere Position,
Stoppen der Zufuhr des lichtsensitiven, aushärtbaren Materials, und
Entfernen des lichtsensitiven, aushärtbaren Materials von der Aufbauplatte beziehungsweise von bereits ausgehärteten Schichten.

13. Verfahren gemäß einem der Ansprüche 11 oder 12 wobei die Stereolithografie-Vorrichtung eine Stereolithografie-Vorrichtung (100) gemäß Anspruch 6 ist.

## Claims

1. An inspection device (10) for a stereolithography device, comprising:
a transmitter unit (1) arranged on a first side of the 3D printed object (7) to be manufactured and configured to emit light (13) onto at least one area of the 3D printed object (7) on the mounting plate (4) of the stereolithography device,
a receiver unit (2) arranged on a second side of the 3D printed object (7) in the beam direction behind the 3D printed object (7) and the mounting plate (4) and configured to detect a part (14) of the light (13) emitted by the transmitter unit (1), and
a processing unit (9) connected to the receiver unit (2), **characterized in that** the processing unit (9) is configured to analyze the received light (14),
wherein the light (13) is emitted by the transmitter unit (1) as two-dimensional light grid, and
wherein the processing unit (9) is configured to compare the part of the light of the emitted light grid received by the receiver unit with a target light grid, which is based on data representing the 3D printed object (7).

2. The inspection device (10) according to claim 1, wherein the transmitter unit (1) consists of an array of laser diodes (11) and/or wherein the receiver unit (2) consists of an array of receiver diodes (21).

3. The inspection device (10) according to claim 1 or 2, wherein the light (13) emitted by the transmitter unit (1) has a wavelength outside the light-sensitive range of the light-sensitive, curable material.

4. The inspection device (10) according to any one of the preceding claims, further comprising an output unit, wherein the output unit is connected to the processing unit (9) and configured to output a warning signal based on an output signal of the processing unit (9), and wherein the output signal of the processing unit (9) is transmitted in a wireless manner or by wire to the output unit.

5. A stereolithography device (100) for producing a three-dimensionally printed object, 3D printed object (7), comprising an inspection device (10) according to any one of the preceding claims.

6. The stereolithography device (100) according to claim 5, comprising:
a container (5) for storing and supplying a light-sensitive, curable material, in particular an ultraviolet, UV-, sensitive, curable material, preferably a UV-sensitive curable resin, a light unit (3) configured to irradiate light having a wavelength within the light-sensitive range of the curable material onto the material, and to selectively cure the material thereby,
a mounting plate (4) configured to enable adhesion of the cured material, and
a movable holding device (12) configured to hold the mounting plate (4) and/or the container (5) and to move the mounting plate (4) and the container (5) relative to each other along at least one room direction corresponding to an assembly direction of the object (7) to be manufactured.

7. A method for automatically inspecting the adhesion of a three-dimensionally printed object, 3D printed object (7), of a light-sensitive, curable material, to a mounting plate (4) of a stereolithography device, wherein the method comprises the following steps:
a) emitting (S1) light (13) through a receiver unit (2) arranged on a first side of the 3D printed object (7) to be manufactured, on at least an area in which the 3D printed object (7) contacts the mounting plate (4), wherein the light in grid form is emitted as two-dimensional grid,
b) receiving (S2) at least a part (14) of the emitted light (13) through a receiver unit (2) which is arranged on a second side of the 3D printed object (7) in beam direction behind the 3D printed object (7) and the mounting plate (4), and
c) analyzing (S3) the received light (14), wherein the received part of the emitted light (13) is compared with a target light grid during the analysis, based on data representing the 3D printed object (7).

8. The method according to claim 7, wherein preferably the mounting plate (4) is moved in an inspection position before the light emission (S1).

9. The method according to claim 7 or 8, wherein the emitted light (13) has a wavelength which is outside the light-sensitive range of the light-sensitive, curable material, and/or wherein the light (13) is emitted inclined to an assembly direction of the 3D printed object (7).

10. The method according to any one of claims 7 to 9, further comprising the step of:
e) emitting a warning signal based on a result of the analysis.

11. The method for producing a three-dimensionally printed object, 3D printed object, of a light-sensitive, curable material, in particular ultraviolet, UV-sensitive material, preferably UV-sensitive resin, through a stereolithography device, wherein the method comprises the inspection method according to any one of claims 7 to 10 and further comprises the following steps:
f) supplying a layer model (S12) representing the 3D printed object to be manufactured in a stereolithography device,
g) evaluating and inspecting exposure data (S13) based on the supplied layer model,
h) positioning a mounting plate of the stereolithography device,
i) supplying the light-sensitive, curable material to the mounting plate,
j) selectively exposing the light-sensitive, curable material through a light unit which, based on the exposure data, irradiates light having a wavelength within the light-sensitive range on the light-sensitive, curable material so that a first material layer is cured and adheres to the mounting plate,
k) shifting the mounting plate in an assembly direction of the 3D printed object to be manufactured,
I) supplying new, not cured, light-sensitive material to the layer cured in step j), and
m) selectively exposing the newly supplied light-sensitive, curable material, based on the exposure data so that a next material layer is cured and grows at the last cured material layer,
wherein the steps i) to m) are repeated until the 3D printed object to be manufactured has been completely assembled, and
wherein the method further comprises the step (S15):
n) selectively executing the inspection method during the repetition of steps i) to m), in particular prior to step i), wherein the mounting plate (4) is preferably moved in an inspection position (S16).

12. The method according to claim 11, further comprising the step of:
p) automatically adapting of parameters of the stereolithography device (S18) based on a result of the inspection method (S17), wherein the automatic adaption of parameters of the stereolithography device comprises at least one of the following measures:
switching off the light unit,
shifting the mounting plate in a secure position,
stopping the supply of light-sensitive, curable material, and
removing the light-sensitive, curable material from the mounting plate or already cured layers.

13. The method according to claim 11 or 12, wherein the stereolithography device is a stereolithography device (100) according to claim 6.

## Revendications

1. Dispositif de test (10) pour un dispositif de stéréolithographie, comprenant :
une unité d'émission (1), disposée d'un premier côté de l'objet d'impression 3D à fabriquer (7) et prévue pour émettre une lumière (13) vers au moins une zone de l'objet d'impression 3D (7) sur la plaque de montage (4) du dispositif de stéréolithographie,
une unité de réception (2), disposée d'un deuxième côté de l'objet d'impression 3D (7) derrière l'objet d'impression 3D (7) et la plaque de montage (4) dans la direction de rayonnement, et prévue pour recevoir une partie (14) de la lumière émise (13) par l'unité d'émission (1), et
une unité de traitement (9), reliée à l'unité de réception (2), **caractérisé en ce que** l'unité de traitement (9) est prévue pour analyser la lumière reçue (14),
où la lumière (13) est émise sous forme de barrière lumineuse bidimensionnelle par l'unité d'émission (1), et
où l'unité de traitement (9) est prévue pour comparer la part de lumière de la barrière lumineuse émise reçue par l'unité de réception avec une barrière lumineuse de consigne basée sur des données représentant l'objet d'impression 3D (7).

2. Dispositif de test (10) selon la revendication 1, où l'unité d'émission (1) se compose d'une matrice de diodes laser (11), et/ou où l'unité de réception (2) se compose d'une matrice de diodes de réception (21).

3. Dispositif de test (10) selon la revendication 1 ou la revendication 2, où la lumière (13) émise par l'unité d'émission (1) a une longueur d'onde extérieure à la plage de sensibilité à la lumière du matériau durcissable sensible à la lumière.

4. Dispositif de test (10) selon l'une des revendications précédentes, comprenant en outre une unité de sortie, ladite unité de sortie étant reliée à l'unité de traitement (9) et prévue pour émettre un signal d'alerte sur la base d'un signal de sortie de l'unité de traitement (9), et le signal de sortie de l'unité de traitement (9) étant transmis sans fil ou de manière filaire à l'unité de sortie.

5. Dispositif de stéréolithographie (100) pour la fabrication d'un objet imprimé en trois dimensions, objet d'impression 3D (7), avec un dispositif de test (10) selon l'une des revendications précédentes.

6. Dispositif de stéréolithographie (100) selon la revendication 5, comprenant :
un réservoir (5) pour le stockage et l'amenée d'un matériau durcissable sensible à la lumière, en particulier d'un matériau durcissable sensible au rayonnement ultraviolet, UV, préférentiellement d'une résine durcissable sensible au rayonnement UV,
une unité lumineuse (3), prévue pour irradier le matériau avec une lumière ayant une longueur d'onde comprise dans la plage de sensibilité à la lumière du matériau durcissable et durcir ainsi le matériau de manière sélective,
une plaque de montage (4), prévue pour permettre une adhérence du matériau durci, et
un dispositif de maintien mobile (12), prévu pour maintenir la plaque de montage (4) et/ou le réservoir (5) et pour déplacer la plaque de montage (4) et le réservoir (5) l'une par rapport à l'autre dans au moins un direction spatiale, correspondant à une direction de montage de l'objet à fabriquer (7).

7. Procédé de test automatique de l'adhérence d'un objet imprimé en trois dimensions, objet d'impression 3D (7), en matériau durcissable sensible à la lumière, sur une plaque de montage (4) d'un dispositif de stéréolithographie,
où ledit procédé comprend les étapes suivantes :
a) émission (S1) d'une lumière (13) par une unité d'émission (2), disposée d'un premier côté de l'objet d'impression 3D à fabriquer (7), vers au moins une zone où l'objet d'impression 3D (7) contacte la plaque de montage (4), la lumière étant émise sous forme de barrière lumineuse, bidimensionnelle,
b) réception (S2) d'au moins une partie (14) de la lumière émise (13) par une unité de réception (2), disposée d'un deuxième côté de l'objet d'impression 3D (7) derrière l'objet d'impression 3D (7) et la plaque de montage (4) dans la direction de rayonnement, et
c) analyse (S3) de la lumière reçue (14), la part reçue de la lumière émise (13) reçue étant comparée lors de l'analyse avec une barrière lumineuse de consigne basée sur des données représentant l'objet d'impression 3D (7).

8. Procédé selon la revendication 7, où la plaque de montage (4) est préférentiellement déplacée vers une position de test avant l'émission de lumière (S1).

9. Procédé selon la revendication 7 ou la revendication 8, où la lumière émise (13) a une longueur d'onde extérieure à la plage de sensibilité à la lumière du matériau durcissable sensible à la lumière, et/ou où la lumière (13) est émise obliquement par rapport à une direction de montage de l'objet d'impression 3D (7).

10. Procédé selon l'une des revendications 7 à 9, comprenant en outre l'étape suivante :
e) émission d'un signal d'alerte sur la base du résultat de l'analyse.

11. Procédé de fabrication d'un objet imprimé en trois dimensions, objet d'impression 3D, en matériau durcissable sensible à la lumière, en particulier un matériau durcissable sensible au rayonnement ultraviolet, UV, préférentiellement une résine durcissable sensible au rayonnement UV, au moyen d'un dispositif de stéréolithographie, ledit procédé comprenant le procédé de test selon l'une des revendications 7 à 10 et comprenant en outre les étapes suivantes :
f) amenée d'un modèle stratifié (S12) représentant l'objet d'impression 3D vers un dispositif de stéréolithographie,
g) détermination et examen de données d'exposition (S13) sur la base du modèle stratifié amené,
h) positionnement d'une plaque de montage du dispositif de stéréolithographie,
i) amenée du matériau durcissable sensible à la lumière vers la plaque de montage,
j) exposition sélective du matériau durcissable sensible à la lumière au moyen d'une unité lumineuse, laquelle, sur la base des données d'exposition, irradie le matériau durcissable sensible à la lumière avec une lumière ayant une longueur d'onde comprise dans la plage de sensibilité à la lumière, de manière à durcir une première couche de matériau et à la faire adhérer sur la plaque de montage,
k) déplacement de la plaque de montage dans une direction de montage de l'objet d'impression 3D à fabriquer,
l) amenée d'un nouveau matériau sensible à la lumière, non durci, vers la couche durcie lors de l'étape j), et
m) exposition sélective du nouveau matériau durcissable sensible à la lumière amené, sur la base des données d'exposition, de manière à durcir une couche de matériau suivante et à la monter sur la dernière couche de matériau durcie,
où les étapes i) à m) sont répétées jusqu'à montage complet de l'objet d'impression 3D à fabriquer, et
où ledit procédé comprend en outre l'étape (S 15) :
n) exécution sélective du procédé de test pendant la répétition des étapes i) à m), en particulier avant l'étape i), la plaque de montage (4) étant préférentiellement déplacée vers une position de test (S 16).

12. Procédé selon la revendication 11, comprenant en outre l'étape suivante :
p) ajustement automatique de paramètres du dispositif de stéréolithographie (S18) sur la base du résultat du procédé de test (S17), ledit ajustement automatique de paramètres du dispositif de stéréolithographie comprenant au moins une des mesures suivantes :
désactivation de l'unité lumineuse,
déplacement de la plaque de montage vers une position sûre,
arrêt de l'amenée du matériau durcissable sensible à la lumière, et
retrait du matériau durcissable sensible à la lumière de la plaque de montage ou de couches déjà durcies.

13. Procédé selon la revendication 11 ou la revendication 12, où le dispositif de stéréolithographie est un dispositif de stéréolithographie (100) selon la revendication 6.
